(19) **Europäisches Patentamt / European Patent Office / Office européen des brevets**

(11) **EP 3 836 555 A1**

(12) **EUROPEAN PATENT APPLICATION**
published in accordance with Art. 153(4) EPC

(43) Date of publication:
**16.06.2021   Bulletin 2021/24**

(21) Application number: **19851148.7**

(22) Date of filing: **03.07.2019**

(51) Int Cl.:
**H04N 21/431** (2011.01)

(86) International application number:
**PCT/CN2019/094614**

(87) International publication number:
**WO 2020/038130 (27.02.2020 Gazette 2020/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority:   **23.08.2018   CN 201810969496**

(71) Applicant: **GUANGDONG OPPO MOBILE TELECOMMUNICATIONS CORP., LTD.**
**Dongguan Guangdong 523860 (CN)**

(72) Inventors:
• **LIN, Jinquan**
  **Dongguan, Guangdong 523860 (CN)**
• **YANG, Hai**
  **Dongguan, Guangdong 523860 (CN)**
• **PENG, Deliang**
  **Dongguan, Guangdong 523860 (CN)**

(74) Representative: **Manitz Finsterwald**
**Patent- und Rechtsanwaltspartnerschaft mbB**
**Martin-Greif-Strasse 1**
**80336 München (DE)**

(54) **VIDEO PROCESSING METHOD AND APPARATUS, ELECTRONIC DEVICE, AND COMPUTER-READABLE MEDIUM**

(57)   The present application provides an electronic device, a computer-readable storage medium, and a method and a video-processing apparatus, and relates to the technical field of processing videos. The video-processing method includes: intercepting multi-frame image data to be rendered, wherein the multi-frame image data to be rendered is sent from a client to a frame buffer corresponding to the screen, and the multi-frame image data to be rendered corresponds to a video file; storing the multi-frame image data to an off-screen rendering buffer; optimizing the multi-frame image data in the off-screen rendering buffer based on a predefined video enhancement algorithm; sending the optimized multi-frame image data to the frame buffer; and reading the optimized multi-frame image data from the frame buffer, and displaying the optimized multi-frame image data on the screen. Therefore, quality of the video file may be improved by optimizing the video file in another buffer, and the user experience may be improved.

```
                    ┌─────────┐
                    │  Start  │
                    └─────────┘
                         │
┌──────────────────────────────────────────────────┐
│ Multi-frame image data to be rendered may be      │ S301
│ intercepted. The multi-frame image data to be     │
│ rendered may be sent from a client to a frame     │
│ buffer corresponding to a screen, and the multi-  │
│ frame image data to be rendered may correspond    │
│ to a video file.                                  │
└──────────────────────────────────────────────────┘
                         │
┌──────────────────────────────────────────────────┐
│ The multi-frame image data may be stored into an  │ S302
│ off-screen rendering buffer.                      │
└──────────────────────────────────────────────────┘
                         │
┌──────────────────────────────────────────────────┐
│ The multi-frame image data in the off-screen      │ S303
│ rendering buffer may be optimized by the          │
│ predefined video enhancement algorithm.           │
└──────────────────────────────────────────────────┘
                         │
┌──────────────────────────────────────────────────┐
│ The multi-frame image data after being optimized  │ S304
│ may be sent to the frame buffer corresponding     │
│ to the screen.                                    │
└──────────────────────────────────────────────────┘
                         │
┌──────────────────────────────────────────────────┐
│ The optimized multi-frame image data may be read  │ S305
│ from the frame buffer and displayed on the screen.│
└──────────────────────────────────────────────────┘
                         │
                    ┌─────────┐
                    │   End   │
                    └─────────┘
```

FIG. 3

**Description**

**CROSS-REFERENCE TO RELATED APPLICATIONS**

The present application claims a priority of Chinese Patent Application No. 201810969496.1, filed on August 23, 2018 in the National Intellectual Property Administration of China, the entire contents of which are hereby incorporated by reference in its entirety.

**TECHNICAL FIELD**

The present disclosure generally relates to the technical field of video processing, and in particular to a video-processing method, a video-processing apparatus, an electronic device, and a computer-readable non-transitory storage medium.

**BACKGROUND**

With the development of electronic technology and information technology, an increasing number of devices may play videos. While playing the videos, the device needs to perform operations such as decoding, rendering, and synthesis, on the videos, and then display the videos on a display screen. However, in the related art, quality of the videos may no longer meet requirements of users, resulting in a poor user experience.

**SUMMARY OF THE DISCLOSURE**

The present disclosure provides a video-processing method, a video-processing apparatus, an electronic device, and a computer-readable non-transitory storage medium to solve the above mentioned problems.

In a first aspect, a video-processing method applied in an electronic device is provided. The electronic device includes a screen, and the method includes: intercepting multi-frame image data to be rendered, wherein the multi-frame image data is sent from a client to a frame buffer corresponding to the screen, and the multi-frame image data corresponds to a video file; sending the multi-frame image data to an off-screen rendering buffer; optimizing the multi-frame image data in the off-screen rendering buffer via a predefined video enhancement algorithm; sending the optimized multi-frame image data to a frame buffer; and reading the optimized multi-frame image data from the frame buffer, and displaying the optimized multi-frame image data on the screen.

In a second aspect, a video-processing apparatus applied in an electronic device is provided. The electronic device includes a screen, and the apparatus includes: an interception unit, configured to intercept multi-frame image data to be rendered, wherein the multi-frame image data is sent from a client to a frame buffer corresponding to the screen, and the multi-frame image data to be rendered corresponds to a video file; a first storage unit, configured to store the multi-frame image data to an off-screen rendering buffer; an optimization unit, configured to optimize the multi-frame image data in the off-screen rendering buffer via a predefined video enhancement algorithm; a second storage unit, configured to send the optimized multi-frame image data to a frame buffer; and a display unit, configured to read the optimized multi-frame image data from the frame buffer, and display the optimized multi-frame image data on the screen.

In a third aspect, an electronic device is provided and includes: a processor, a non-transitory memory, a screen, and one or more clients. The one or more clients are stored in the non-transitory memory and are configured to be executed by the processor, and one or more clients are configured to perform the above-mentioned method.

In a fourth aspect, a computer-readable non-transitory storage medium is provided. A program code is stored in the computer-readable non-transitory storage medium, and the program code is able to be invoked and executed by a processor to perform the above-mentioned method.

**BRIEF DESCRIPTION OF THE DRAWINGS**

In order to illustrate technical solutions of embodiments of the present disclosure clearly, accompanying drawings for describing the embodiments will be introduced in brief. Obviously, the drawings in the following description are only some embodiments of the present application. For those skilled in the art, other drawings can be obtained based on the provided drawings without any creative work.

FIG. 1 is a diagram of a framework of playing a video according to an embodiment of the present disclosure.

FIG. 2 is a diagram of a framework of rendering an image according to an embodiment of the present disclosure.

FIG. 3 is a flow chart of a video-processing method according to an embodiment of the present disclosure.

FIG. 4 is a view of an interface of a video list displayed on a client device according to an embodiment of the present disclosure.

FIG. 5 is a flow chart of performing operations of S302 to S305 of the method shown in FIG. 3.

FIG. 6 is a flow chart of a video-processing method according to another embodiment of the present disclosure.

FIG. 7 is a flow chart of a video-processing method according to still another embodiment of the present disclosure.

FIG. 8 is a diagram of a framework of playing a video according to another embodiment of the present disclosure.

FIG. 9 is a diagram of a video-processing apparatus according to an embodiment of the present disclosure.

FIG. 10 is a diagram of an electronic device according to an embodiment of the present disclosure.

FIG. 11 is a non-transitory storage unit, which stores or carries a program code for performing the video-processing method according to an embodiment of the present disclosure.

## DETAILED DESCRIPTION

In order to allow any ordinary skilled person in the art to understand the technical solution of the present disclosure, technical solutions of the present disclosure may be clearly and comprehensively described by referring to the accompanying drawings.

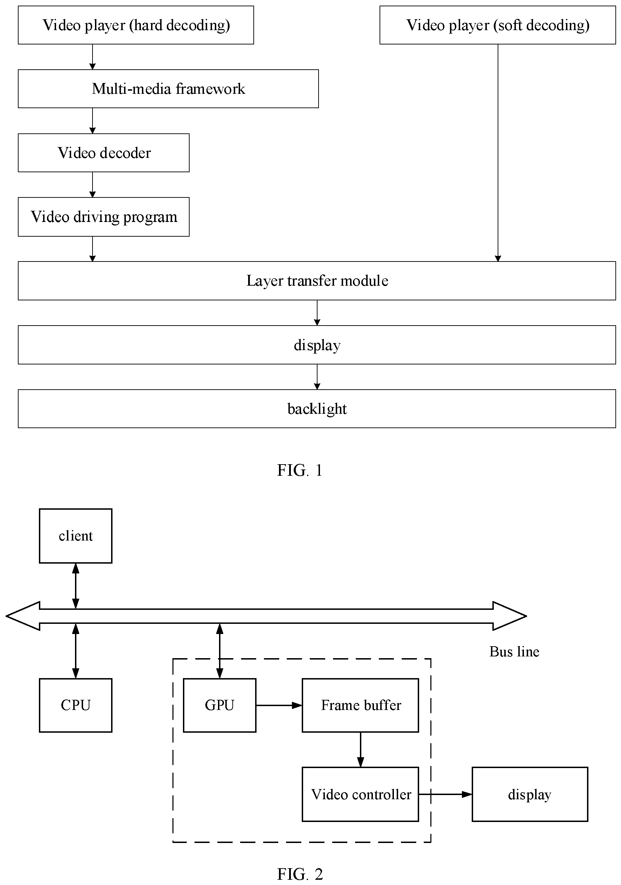

As shown in FIG. 1, FIG. 1 is a diagram of a framework of playing a video according to an embodiment of the present disclosure. In detail, in response to an operating system acquiring data to be displayed, the operating system may decode audio and video data. Typically, a video file includes a video stream and an audio stream. Packaging formats of the audio and video data in various video formats are various. A process of synthesizing the audio stream and the video stream may be referred as muxer, whereas a process of separating the audio stream and the video stream out of the video file may be referred as demuxer. Playing the video file may require the audio stream and the video stream to be separated from the video file and decoded. A decoded video frame may be rendered directly. An audio frame may be sent to a buffer of an audio output device to be played. Timestamp of video rendering the video frame and timestamp of playing the audio frame must be controlled to be synchronous.

In detail, video decoding may include hard decoding and soft decoding. The hard decoding refers to enabling a graphics processing unit (GPU) to process a part of the video data which is supposed to be processed by a central processing unit (CPU). As a computing capacity of the GPU may be significantly greater than that of the CPU, a computing load of the CPU may be significantly reduced. As an occupancy rate of the CPU is reduced, the CPU may run some other applications at the same time. As a relatively better CPU, such as i5 2320, AMD, or any four-core processor, a difference between the hard decoding and the soft decoding is just a matter of personal preference.

In detail, as shown in FIG. 1, a media framework may acquire a video file to be played on the client from an API of the client, and may send the video file to a video decoder (Video Decode). The media framework may be installed in an Android operating system, and a basic framework of the media framework of the Android operating system may be composed of a MediaPlayer, a MediaPlayerService, and a Stagefrightplayer. The media player has a C/S structure. The MediPlayer serves as the client of the C/S structure. The MediaPlayerService and the Stagefrightplayer serve as the server side of the C/S structure and play a role in playing a multimedia file. The server side may achieve and respond to a request of the client through the Stagefrightplayer. The Video Decode is an ultra-video decoder integrating functions of audio decoding, video decoding, and playing the multimedia file, and configured to decode the video data.

The soft decoding refers to the CPU performing video decoding through software, and invoking the GPU to render, synthesize, and play the video on a display screen after the decoding. On the contrary, the hard decoding refers to performing the video decoding by a certain daughter card only, without the CPU.

Regardless of hard decoding or soft decoding, after the video data is decoded, the decoded video data may be sent to SurfaceFlinger. The decoded video data may be rendered and synthesized by SurfaceFlinger, and displayed on the display screen. The SurfaceFlinger is an independent service, and receives a surface of all Windows as an input. The SurfaceFlinger may calculate a position of each surface in a final synthesized image based on parameters, such as ZOrder, transparency, a size, and a position. The SurfaceFlinger may send the position of each surface to HWComposer or OpenGL to generate a final display Buffer, and the final display Buffer may be displayed on a certain display device.

**EP 3 836 555 A1**

As shown in Figure 1, in soft decoding, the CPU may decode the video data and send the decoded video data to SurfaceFlinger to be rendered and synthesized. In hard decoding, the GPU may decode the video data and send the decoded video data to SurfaceFlinger to be rendered and synthesized. The SurfaceFlinger may invoke the GPU to achieve image rendering and synthesis, and display the rendered and synthesized image on the display screen.

In detail, a process of rendering the image may be shown in FIG. 2. The CPU may acquire the video file to be played sent from the client, decode the video file, obtain decoded video data after decoding, and send the video data to the GPU. After the GPU completes rendering, a rendering result may be input into a frame buffer (FrameBuffer in Figure 2). A video controller may read data in the frame buffer line by line based on a HSync signal, and send it to a display screen for display after digital-to-analog conversion.

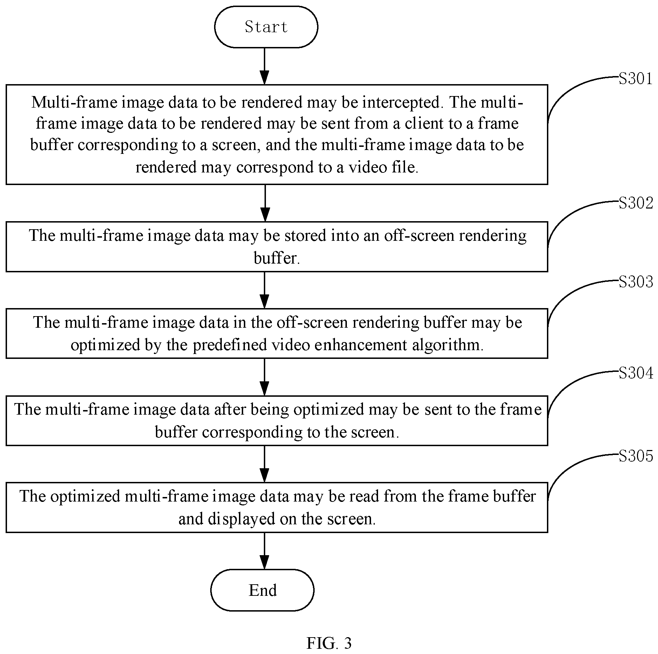

However, in the related art, quality of the played video is poor. The applicant studied the factor causing the poor quality and discovers that enhancement and optimization of the video data is missing. Therefore, in order to solve the technical problem, the present disclosure provides a video-processing method. The method may be applied in an electronic device to improve the quality of the video while being played. In detail, the video-processing method may be shown in FIG. 3, and include operations S301 to S305.

In an operation S301, multi-frame image data to be rendered may be intercepted. The multi-frame image data to be rendered may be sent from a client to a frame buffer corresponding to a screen, and the multi-frame image data to be rendered may correspond to a video file.

In detail, in response to the client of an electronic device playing a video, the electronic device may acquire the video file to be played, and decode the video file. In detail, the above-mentioned soft decoding or hard decoding may be performed to decode the video file. The multi-frame image data to be rendered corresponding to the video file may be obtained after decoding. Subsequently, the multi-frame image data may be rendered and then displayed on the screen.

In detail, after the client acquires the video file to be played, the client may invoke the CPU or the GPU to decode the video file to be played to obtain the image data to be rendered corresponding to the video file to be played. In an implementation, the client may perform soft decoding on an interface of the video file to obtain the image data to be rendered corresponding to the video file. In detail, the client may send the video file to be played to the CPU, and instruct the CPU to decode the video file and return a decoded result to the client.

In an implementation, the CPU may acquire a video playing request sent from the client. The video playing request may include the video file to be played. In detail, the video playing request may include identity information of the video file to be played, and the identity information may be a name of the video file. The video file may be found in a storage space where the video file is stored, based on the identity information of the video file.

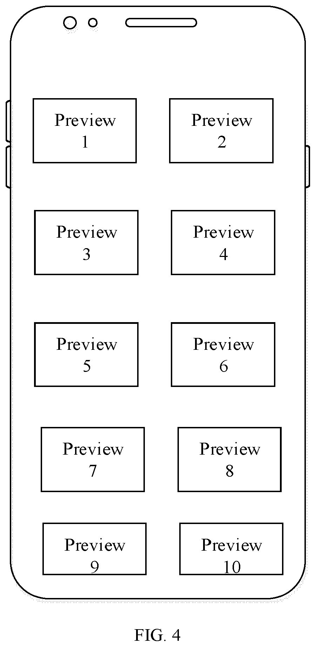

In detail, the video playing request may be obtained for a touch state of a play button corresponding to each of various video files displayed on an interface of the client. In detail, as shown in FIG. 4, a video list interface of the client displays display content corresponding to each of various videos. As shown in FIG. 1, the display content corresponding to each of the various videos may include a thumbnail corresponding to each of the various videos. The thumbnail may be used as a touch button. In response to a user clicking the thumbnail, the client may detect the thumbnail being selected and clicked by the user and determine the video file desired to be played.

In response to a video file in the video list being selected by the user, the client may enter a video playing interface, and a play button on the video playing interface may be clicked. The client may monitor the touch operation performed by the user to detect the video file currently clicked by the user. Subsequently, the client may send the video file to the CPU, and the CPU may decode the video file by either hard decoding or soft decoding.

In the present embodiment, the CPU may acquire the video file to be played, and process the video file based on a soft decoding algorithm to obtain the multi-frame image data corresponding to the video file, and then return the decoded multi-frame image data to the client.

After the client acquires the multi-frame image data to be rendered, the multi-frame image data to be rendered may be required to be sent to the frame buffer, and the multi-frame image data may be rendered at the frame buffer and then displayed on the screen. The frame buffer may correspond to a storage space in a video memory of the GPU, and the frame buffer may correspond to the screen.

In detail, the multi-frame image data to be rendered may be intercepted by the operating system of the electronic device. The multi-frame image data is sent from the client to the frame buffer corresponding to the screen, and corresponds to the video file. In detail, the multi-frame image data to be rendered may be intercepted by a data interception module configured in the operating system of the electronic device. The data interception module may be an application in the operating system, such as, a Service. The application program may invoke the CPU or the GPU to intercept the multi-frame image data to be rendered, which may be sent from the client to the frame buffer corresponding to the screen and may correspond to the video file.

In some embodiments, the data interception module may be automatically bound to the client while installing the client on the electronic device, that is, the data interception module may serve as a third-party plug-in installed in the framework of the client.

In an operation S302, the multi-frame image data may be stored into an off-screen rendering buffer.

4

In detail, the data interception module may store the multi-frame image data into the off-screen rendering buffer, and that is, after the data interception module intercepts the multi-frame image data, the data interception module may store the multi-frame image data into the off-screen rendering buffer, wherein the multi-frame image data may be sent from the client to the frame buffer corresponding to the screen and is to be rendered, and the multi-frame image data to be rendered may correspond to the video file.

In an implementation, the off-screen rendering buffer may be set in the GPU in advance. In detail, the GPU may invoke a client-side rendering module to render and synthesize the multi-frame image data to be rendered, and send the rendered and synthesized multi-frame image data to the display screen for display. In detail, the client-side rendering module may be an OpenGL module. A final position of an OpenGL rendering pipeline may be in the frame buffer. The frame buffer may be a series of two-dimensional pixel storage arrays, and include a color buffer, a depth buffer, a stencil buffer and an accumulation buffer. The OpenGL may use the frame buffer provided by a window system by default.

GL_ARB_framebuffer_object may be an extension of the OpenGL and may provide a way to create an additional frame buffer object (FBO). The OpenGL may redirect the frame buffer originally drawn to the window to the FBO through the frame buffer object.

Another buffer may be set outside the frame buffer through FBO, and that is the off-screen rendering buffer. Subsequently, the acquired multi-frame image data may be stored in the off-screen rendering buffer. In detail, the off-screen rendering buffer may be a storage space corresponding to the image GPU, that is, the off-screen rendering buffer itself may not have a space for storing images, but may map with a storage space of the GPU, and an image may be stored in the storage space of the GPU corresponding to the off-screen rendering buffer.

The multi-frame image data may be stored in the off-screen rendering buffer by binding the multi-frame image data to the off-screen rendering buffer. That is, the multi-frame image data may be found in the off-screen rendering buffer.

In an operation S330, the multi-frame image data stored in the off-screen rendering buffer may be optimized based on a predefined video enhancement algorithm.

In an implementation, optimizing the multi-frame image data may include adding a special effect to the image data, such as, adding a special effect layer to the image data to achieve the special effect.

In another implementation, optimizing the multi-frame image data in the off-screen rendering buffer based on the predefined video enhancement algorithm may include: optimizing an image parameter of the multi-frame image data in the off-screen rendering buffer. Optimizing the image parameter may include at least one of: exposure enhancement, denoising, edge sharpening, contrast increasing, or saturation increasing.

In detail, the decoded image data is data in an RGBA format, and therefore, in order to optimize the image data, the data in the RGBA format may be required to be converted into data in a HSV format. In detail, a histogram of the image data may be acquired, and statistics may be performed on the histogram to obtain a parameter for converting the data in the RGBA format into the data in the HSV format. The data in the RGBA format may be converted into the data in the HSV format based on the parameter.

The exposure enhancement may be performed to increase brightness of the image. On the histogram, a brightness value of an area having a relatively low brightness value may be increased. Further, the brightness of the image may be increased by performing non-linear superposition on the brightness value. In detail, I represents a dark image to be processed, and T represents a brighter image after being processed. The exposure enhancement may be achieved by means of $T(x)=I(x)+(1-I(x))*I(x)$. Each of the T and the I may be an image having a value in a range of [0, 1]. In response to brightness increasing being not achieved effectively by performing the exposure enhancement only once, the exposure enhancement may be performed iteratively.

Denoising the image data may be performed to remove noise of the image. In detail, the image may be affected and interfered by various noise while being generated and sent, causing quality of the image to be reduced, and therefore, image processing and a visual effect of the image may be negatively affected. There are many types of noise, such as electrical noise, mechanical noise, channel noise and other types of noise. Therefore, in order to suppress the noise, improve the quality of the image, and facilitate higher-level processing, a denoising pre-process must be performed on the image. Based on probability distribution of the noise, the noise may be classified as Gaussian noise, Rayleigh noise, gamma noise, exponential noise and uniform noise.

In detail, the image may be denoised by a Gaussian filter. The Gaussian filter may be a linear filter able to effectively suppress the noise and smooth the image. A working principle of the Gaussian filter may be similar to that of an average filter. An average value of pixels in a filter window may be taken as an output. A coefficient of a template of the window in the Gaussian filter may be different from that in the average filter. The coefficient of the template of the average filter may always be 1. However, the coefficient of the window template of the Gaussian filter may decrease as a distance between a pixel in the window and a center of the window increases. Therefore, a degree of blurring of the image caused by the Gaussian filter may be smaller than that caused by the average filter.

For example, a 5×5 Gaussian filter window may be generated. The center of the window template may be taken as an origin of coordinates for sampling. Coordinates of each position of the template may be brought into the Gaussian function, and a value obtained may be the coefficient of the window template. Convolution may be performed on the Gaussian filter window and the image to denoise the image.

Edge sharpening may be performed to enable a blurred image to become clear. Generally, the edge sharpening may be achieved by two means: i.e., by differentiation and by high-pass filtering.

The contrast increasing may be performed to enhance the quality of the image, enabling colors in the image to be vivid. In detail, the image enhancement may be achieved by performing contrast stretching, and the contrast stretching may be a gray-scale transformation operation. Gray-scale values may be stretched to cover an entire interval of 0-255 through the gray scale transformation. In this way, the contrast may be significantly enhanced. A following formula may be taken to map a gray value of a certain pixel to a larger gray-scale space.

$$I(x,y)=[(I(x,y)-Imin)/(Imax-Imin)](MAX-MIN)+MIN$$

The Imin represents a minimal gray scale value of an original image, and the Imax represents a maximal gray scale value of the original image. The MIN represents a minimal gray scale value of the gray scale space that a pixel is stretched to reach, and the MAX represents a maximal gray scale value of the gray scale space that a pixel is stretched to reach.

The quality of the image may be increased through the video enhancement algorithm. In addition, a corresponding video enhancement algorithm may be selected based on the video file. In detail, before optimizing the multi-frame image data in the off-screen rendering buffer based on the predefined video enhancement algorithm, the method further includes: acquiring a video type corresponding to the video file; and determining the video enhancement algorithm based on the video type.

In detail, a predefined number of images in the video file may be acquired and taken as an image sample, and all objects in each image of the image sample may be analyzed. In this way, a ratio of each object in the image sample may be determined. In detail, the objects may include an animal, a person, food, etc. A type of the image may be determined based on the determined ratio of each object, and therefore, the type of the video file may be determined. The image type may include a type of people, a type of the animal, a type of the food, a type of the scenery, etc.

The video enhancement algorithm corresponding to the video file may be determined based on a corresponding relationship between a video type and the video enhancement algorithm. In detail, the video enhancement algorithm may include at least one of exposure enhancement, denoising, edge sharpening, contrast increasing, and saturation increasing. Different video types may correspond to different exposure enhancement, different denoising, different edge sharpening, different contrast increasing and different saturation increasing, for example, as shown in Table 1.

Table 1

| Video type | Video enhancement algorithm |
|---|---|
| Video in the type of the scenery | Exposure enhancement, denoising, contrast increasing |
| Video in the type of people | Exposure enhancement, denoising, edge sharpening, contrast increasing, saturation increasing |
| Video in the type of animal | Exposure enhancement, denoising, edge sharpening |
| Video in the type of the food | edge sharpening, contrast increasing |

Referring to the mapping relationship shown in Table 1, the video enhancement algorithm corresponding to the video file may be determined.

In an operation S304, the multi-frame image data after being optimized may be sent to the frame buffer corresponding to the screen.

The frame buffer may correspond to the screen and configured to store data required to be displayed on the screen, such as the Framebuffer shown in Figure 2. The Framebuffer may be a driver interface installed in an operating system kernel. Taking the Android operating system as an example, the Linux may be working in a protected mode. Therefore, a user state process may not use an invoking interruption provided in the graphics card BIOS to directly write data and display the data on the screen, like how the DOS system works. Linux provides the Framebuffer to allow the user state process to directly write the data and display the data on the screen. The Framebuffer mechanism may imitate a function of the graphics card, and the video memory may be directly operated by reading and writing performed by the Framebuffer. In detail, the Framebuffer may be regarded as an image of the video memory. After the Framebuffer is mapped to a process address space, the Framebuffer may read and write directly, and the written data may be displayed on the screen.

The frame buffer may be regarded as a space for storing data. The CPU or GPU may store the data to be displayed into the frame buffer. The Framebuffer may not have any computing capability. A video controller may read the data stored in the Framebuffer based on a refreshing frequency of the screen.

The optimized multi-frame image data may be sent to the frame buffer, and the transmission may be performed by the data interception module. That is, after the data interception module intercepts the multi-frame image data to be rendered, the data interception module may send the multi-frame image data to be rendered to the off-screen rendering buffer, wherein the multi-frame image data to be rendered may be sent from the client to the frame buffer corresponding to the screen, and may correspond to the video file. Further, the data interception module may invoke the GPU to perform the operation of optimizing the multi-frame image data in the off-screen rendering buffer based on the predefined video enhancement algorithm. The GPU may return the result to the data interception module, and the data interception module may send the optimized multi-frame image data to the frame buffer.

In detail, the operation of sending the optimized multi-frame image data to the frame buffer may include: sending the optimized multi-frame image data to the client. The client may store the optimized multi-frame image data to the frame buffer.

In other words, after the data interception module acquires the optimized multi-frame image data, the data interception module may send the optimized multi-frame image data to the client, and the client may continue to perform the operation of storing the optimized multi-frame image data to the frame buffer. In this way, while performing the operation of sending the multi-frame image data to be rendered to the frame buffer on the client, after the multi-frame image data to be rendered is intercepted and optimized, the multi-frame image data, which is sent from the client to the frame buffer and is to be rendered, may be replaced with the optimized multi-frame image data.

In an operation S305, the optimized multi-frame image data may be read from the frame buffer and displayed on the screen.

In detail, after the optimized multi-frame image data is stored in the frame buffer, and after the GPU detects the data written in the frame buffer, the optimized multi-frame image data may be read from the frame buffer, and displayed on the screen.

In an implementation, the GPU may read the optimized multi-frame image data from the frame buffer frame by frame based on the refreshing frequency of the screen, and the optimized multi-frame image data may be rendered, synthesized, and displayed on the screen.

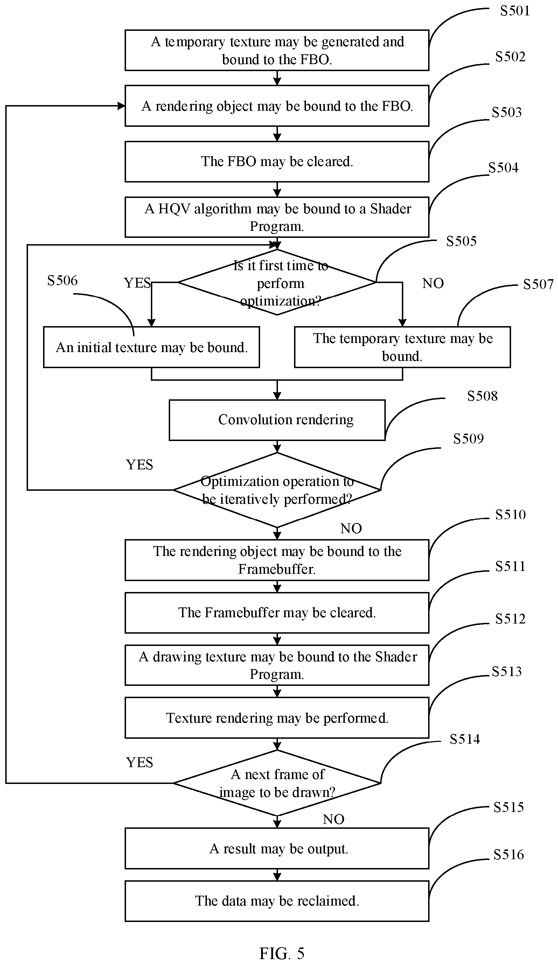

Specific implementations of the video-processing method based on the FBO mechanism of the Android operating system will be described in more detail, as shown in FIG. 5. In detail, the method is a further description of the operations S302 to S305 in the method shown in FIG. 3. The method may include operations S501 to S506.

In an operation S501, a temporary texture may be generated and bound to the FBO.

The FBO may be regarded as the off-screen rendering buffer as described in the above embodiment.

The video memory of the GPU may include a vertex buffer, an index buffer, a texture buffer, and a template buffer. The texture buffer may be a storage space for storing texture data. As the FBO does not have an actual storage space, the temporary texture may be generated and bound to the FBO. In this way, a mapping relation between the temporary texture and the FBO may be achieved. As the temporary texture may be a variable, and the video memory may have a certain storage space, the actual storage space of the FBO may be the storage space of the temporary texture. Therefore, a certain video memory may be allocated to the FBO.

In an operation S502, a rendering object may be bound to the FBO.

The rendering object may be the multi-frame image data to be rendered corresponding to the video file. In detail, the multi-frame image data may be stored into the FBO through the rendering object. The rendering object may be taken as a variable. The multi-frame image data may be assigned to the rendering object, and the rendering object may be bound to the FBO. In this way, the multi-frame image data, which is to be rendered and corresponds to the video file, may be stored into the off-screen rendering buffer. For example, a handle may be set in the FBO. The handle may point to the multi-frame image data, and the handle may be the rendering object.

In an operation S503, the FBO may be cleared.

Before rendering, old data in the FBO needs to be cleared, and the old data may include a color buffer, the depth buffer and the template buffer. It should be noted that the multi-frame image data to be rendered and corresponding to the video file may be stored in the storage space corresponding to the rendering object, and the multi-frame image data may be written into the FBO through mapping, rather than actually stored in the actual storage space of the FBO. Therefore, clearing the FBO may not delete the multi-frame image data.

In an operation S504, a HQV algorithm may be bound to a Shader Program.

Shader may be a code of a shader (including a vertex shader, a fragment shader, etc.). The Shader Program may be an engine (program) for executing the Shader code to perform the operation specified by the Shader code.

The HQV algorithm may be the video enhancement algorithm as mentioned in the above. The video enhancement algorithm may be bound to the Shader Program. It may be defined in the program how to execute the video enhancement algorithm. That is, a specific process of executing the algorithm may be written in a corresponding program in the Shader Program. In this way, the GPU may execute the video enhancement algorithm.

In an operation S505, it may be determined whether the optimization is performed for a first time.

In detail, each optimization operation performed on the video file may be recorded. For example, a frequency variable may be set to indicate the number of optimization operations performed. Each time the optimization operation is performed, the frequency variable may be increased by 1. Determining whether the optimization operation is performed for the first time, means whether the video enhancement algorithm is performed to optimize the image data of the video file for the first time. In response to the video enhancement algorithm being performed to optimize the image data of the video file for the first time, an operation S506 may be performed. In response to the video enhancement algorithm being not performed to optimize the image data of the video file for the first time, an operation S507 may be performed.

In the operation S506, an initial texture may be bound.

In the operation S507, the temporary texture may be bound.

In addition to setting the temporary texture, the initial texture may also be set. In detail, the initial texture may be taken as a variable for inputting data into the temporary texture, and content of the temporary texture may directly be mapped into the FBO. The initial texture and the temporary texture may both be taken as variables for storing the data. In detail, a feature data corresponding to the video enhancement algorithm may be written into a data texture object, and the data texture object may be the temporary texture.

In response to the optimization operation being performed for the first time, no data may be stored in the temporary texture, because the temporary texture may be cleared while initializing.

In response to the optimization operation being performed for the first time, the video enhancement algorithm may be assigned to the initial texture, and then the feature data corresponding to the video enhancement algorithm may be sent to the temporary texture from the initial texture. In detail, the initial texture may be assigned to the temporary texture. The feature data corresponding to the video enhancement algorithm may be a parameter of the video enhancement algorithm, for example, various parameter values of a median filter in denoising.

In response to the optimization operation being not performed for the first time, any data may be stored in the temporary texture, and it may not be required to acquire the feature data corresponding to the video enhancement algorithm from the initial texture. The feature data corresponding to a previously stored video enhancement algorithm may be directly acquired from the temporary texture.

In an operation S508, convolution rendering may be performed.

The feature data corresponding to the video enhancement algorithm may be convolved with the multi-frame image data to be rendered to optimize the multi-frame image data to be rendered. In detail, the multi-frame image data in the off-screen rendering buffer may be optimized by rendering the rendering object and the data texture object. That is, an operation of rendering to texture (RTT) may be performed.

In an operation S509, it may be determined whether the optimization operation is required to be iteratively performed.

In response to the optimization operation being required to be iteratively performed, a number variable may be increased by 1, and the operation S505 may be returned and performed. In response to the optimization operation being not required to be iteratively performed, an operation S509 may be performed.

In an operation S510, the rendering object may be bound to the Framebuffer.

In this situation, the rendering object has been optimized by the video enhancement algorithm, and that is, the rendering object may be the optimized multi-frame image data. The optimized multi-frame image data may be sent to Framebuffer for storage.

In an operation S511, the Framebuffer may be cleared.

In an operation S512, a drawing texture may be bound to the Shader Program.

The drawing texture may be a texture configured to draw an image and store an effect parameter. In detail, the drawing texture may be configured to increase an effect on the image data, such as shadows, and so on.

In an operation S513, texture rendering may be performed.

Similarly, the operation of RTT may be performed, but the rendering object in the present operation may be the optimized multi-frame image data, and the texture object may be the drawing texture.

In an operation S514, it may be determined whether a next frame of image is required to be drawn.

After drawing a frame of image data, the operation S502 may be returned to and performed in response to the next frame of image being required to be drawn, and an operation S515 may be performed in response to the next frame of image being not required to be drawn.

In an operation S515, a result may be output.

In an operation S516, the data may be reclaimed.

After reclaiming the rendered image data, the screen may be controlled to displays the image data.

It should be noted that, the above operations that are not described in detail may refer to the description of the operations in the foregoing embodiments, and will not be repeatedly described hereinafter.

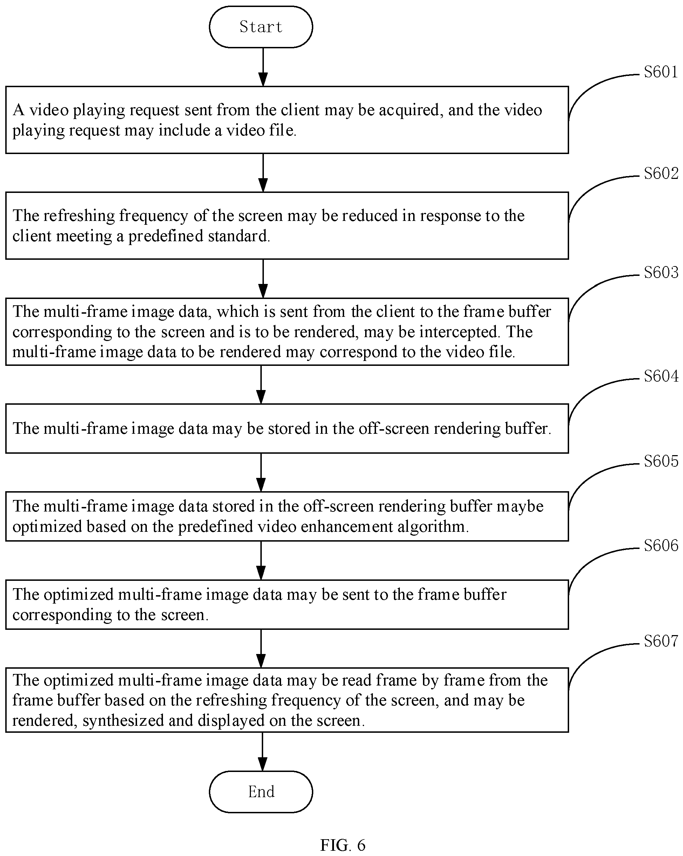

In addition, considering that taking the video enhancement algorithm to optimize the image data may cause delays or even freezes while playing the video, a refreshing frequency of the screen of the client may be reduced while playing the video, to reduce the delay. In detail, as shown in FIG. 6, a video-processing method may be provided and include operations S601 to S607.

In an operation S601, a video playing request sent from the client may be acquired, and the video playing request may include a video file.

In an operation S602, the refreshing frequency of the screen may be reduced in response to the client meeting a predefined standard.

After the video playing request is acquired, a client requesting to play the video may be determined, such that an identifier of the client may be acquired. In detail, the client may be a client installed in an electronic device and have a video playing function. The client may have an icon displayed on a system desktop. A user may activate the client by clicking the icon of the client. For example, activation of the client may be determined based on a package name of an application clicked by the user. The package name of the video application may be obtained from a code in a system background, and a format of the packing name may be: com. android. video.

It may be determined whether the client meets the predefined standard. The refreshing frequency of the screen may be reduced in response to the client meeting the predefined standard. The refreshing frequency of the screen may not be reduced in response to the client not meeting the predefined standard.

In detail, the predefined standard may be a standard set by the user according to actual demands. For example, a name of the client may be required to conform to a certain category, or installation time of the client may be required to be within a predefined time period, or a developer of the client may be listed in a predefined list. Various predefined standards may be set based on various application scenarios.

The client meeting the predefined standard may indicate that resolution of the video played on the client is relatively low, or a size of the video played on the client is relatively small. An approximate refreshing frequency of the screen may not be required, and the refreshing frequency of the screen may be reduced.

In an implementation, the refreshing frequency of the screen of the screen corresponding to the client meeting the predefined standard may be a predefined refreshing frequency of the screen, and the electronic device may acquire a current refreshing frequency of the screen. In response to the current refreshing frequency of the screen being greater than the predefined refreshing frequency of the screen, the current refreshing frequency of the screen may be reduced to the predefined refreshing frequency of the screen. In response to the current refreshing frequency of the screen being less than or equal to the predefined refreshing frequency of the screen, the current refreshing frequency of the screen may remain unchanged. In detail, in response to the current refreshing frequency of the screen being equal to the predefined refreshing frequency of the screen, the current refreshing frequency of the screen may remain unchanged. In response to the current refreshing frequency of the screen being less than the predefined refreshing frequency of the screen, the current refreshing frequency of the screen may be increased to be equal to the predefined refreshing frequency of the screen.

In response to the client not meeting the predefined standard, a value of the current refreshing frequency of the screen may be compared to the predefined refreshing frequency of the screen. In response to the current refreshing frequency of the screen being less than a default refreshing frequency of the screen, the current refreshing frequency of the screen may be increased to be equal to the default refreshing frequency of the screen. The default refreshing frequency of the screen may be greater than the predefined, refreshing frequency of the screen.

In detail, in response to the client meeting the predefined standard, the refreshing frequency of the screen may be reduced by: acquiring the identifier of the client; determining whether the identifier of the client meets a predefined identifier. The refreshing frequency of the screen may be reduced in response to the identifier of the client meting the predefined identifier.

Identity information of the client may be a name or a package name of the client. The predefined identifier may be stored in the electronic device in advance. The predefined identifier may include a plurality of identifiers of a plurality of predefined clients. Video files played on the predefined clients may be relatively small or may have relatively low resolution, and an excessively high refreshing frequency of the screen may not be required. Therefore, the refreshing frequency of the screen may be reduced to reduce power consumption of electronic device.

In another implementation, in response to the client meeting the predefined standard, the refreshing frequency of the screen may be reduced by: acquiring a type of the client, and determining whether the client type is a predefined type. The refreshing frequency of the screen may be reduced in response to the client type being the predefined type.

The predefined type may be a type set by the user according to demands, such as a client in a we-media video type. Compared to a client for playing movies or playing games, a video file played on the client in the we-media video type may be smaller-sized or have a relatively low resolution. It may be necessary to determine whether the client is in the video type.

In detail, after the identifier of the client is acquired, the client type may be determined based on the identifier. The identifier of the client may be the package name of the client, the name of the client, etc. For example, a corresponding relationship between the identifier of the client and the client type may be stored in the electronic device in advance, as shown in Table 2 below.

Table 2

| The identifier of the client | The client type |
|---|---|
| Apk1 | Game |
| Apk2 | Video |
| Apk3 | Audio |

In this way, based on the corresponding relationship between the identifier of the client and the client type shown in Table 2, the client type corresponding to the video file may be determined.

In an implementation, the client type mentioned in the above may be a type set for the client by the developer of the client while developing the client, or may be a type set by the user for the client after the client is installed on the electronic device. For example, the user may install a certain client on the device. After the installation is completed and the client is entered, a dialog box may be displayed, instructing the user to set the client type. The user may determine a category, which the client belongs to, based on the user's demands. For example, the user may set a certain social application as an audio application, or a video application, or a social application.

In addition, client installation software may be installed in the electronic device. A client list may be set in the client installation software, and the user may download the client, update and activate the client. The client installation software may display various clients based on client types, such as audio clients, video clients, game clients, and so on. Therefore, while the user installing the client through the client installation software, the user may already know the client type.

Further, in response to a client able to play videos and audios, the client may be set as the video client in response to the client supporting the function of playing videos; and the client may be set as the audio client in response to client not supporting the function of playing videos but supporting the function of play audios only. In detail, it may be determined whether the client supports the function of playing videos based on function description contained in function description information of the client, such as a playing format supported by the client. Alternatively, it may be determined whether the client supports the function of playing videos by detecting presence of a video playing module in program modules of the client, such as presence of a codec algorithm of video playing.

In another implementation, in response to a client able to play both videos and audios, such as a video playing software able to play au audio file or a video file, the client type may be determined based on a usage record of the client. That is, the client may be determined as tending to videos or audios based on the usage record of the client while being used within a certain time period.

In detail, the operation behavior data of all users on the client within a predefined time period may be acquired. All users may refer to all users who have installed the client. The operation behavior data may be acquired from a server corresponding to the client. That is to say, the user may log in to the client with a user account corresponding to the user while using the client. The operation behavior data corresponding to the user account may be sent to the server corresponding to the client. The server may store the acquired operation behavior data corresponding to the user account. In some embodiments, the electronic device may send an operational behavior inquiry request for the client to the server corresponding to the client, and the server may send the operation behavior data of all users within the certain predefined time period to the electronic device.

The operation behavior data may include a name and time of the played audio file, and a name and time of the played video file. By analyzing the operation behavior data, the number of audio files played on the client within the certain predefined time period, total time the client spends on playing the audio files within the certain predefined time period, the number of video files played on the client within the certain predefined time period, and total time the client spends on playing the video files within the certain predefined time period may be determined. The client type may be determined based on ratios of the total time the client spends on playing the audio files and the total time the client spends on playing the video files in the certain predefined time period. In detail, the ratios of the total time the client spends on playing the audio files and the total time the client spends on playing the video files in the certain predefined time period may be obtained. To provide a concise description, the total time the client spends on playing the audio files in the certain predefined time period may be referred as an audio playing ratio, and the total time the client spends on playing the video files in the certain predefined time period may be referred as a video playing ratio. In response to video playing ratio being greater than the audio playing ratio, the client may be set as the video client. In response to audio playing ratio being greater than the video playing ratio, the client may be set as the audio client. For example, the predefined time period may be 30 days, which is 720 hours; the total time spent on playing the audio files may be 200 hours, the audio playing ratio may be 27.8%; and the total time spent on playing the video files may be 330 hours, the video playing ratio may be 45.8%. The video playing ratio may be greater than the audio playing ratio, and the client may be set as the video client.

In some embodiments, the electronic device may send a type inquiry request for the client to the server, and the server may determine the aforementioned audio playing ratio and video playing ratio based on the acquired operation behavior data corresponding to the client. Further, the client type may be determined by comparing the audio playing ratio and the video playing ratio. Detail of the determination may refer to the above description.

In this way, based on a record of the playing data of the client, the resolution of the videos played on the client most of the time and the client type may be determined. In this way, it may be determined whether the client is a we-media video client. In response to the client being a we-media video client, the identifier of client may be determined as meeting the predefined identifier.

In an operation S603, the multi-frame image data, which is sent from the client to the frame buffer corresponding to the screen and is to be rendered, may be intercepted. The multi-frame image data to be rendered may correspond to the video file.

In an operation S604, the multi-frame image data may be stored in the off-screen rendering buffer.

In an operation S605, the multi-frame image data stored in the off-screen rendering buffer maybe optimized based on the predefined video enhancement algorithm.

In an operation S606, the optimized multi-frame image data may be sent to the frame buffer corresponding to the screen.

In an operation S607, the optimized multi-frame image data may be read frame by frame from the frame buffer based on the refreshing frequency of the screen, and may be rendered, synthesized and displayed on the screen.

While the video is being played, the video controller in the GPU may read the optimized multi-frame image data from the frame buffer frame by frame based on the refreshing frequency of the screen, and the optimized multi-frame image data on the screen may be rendered, synthesized, and displayed on the screen. , The refreshing frequency of the screen may be regarded as a clock signal. Whenever the clock signal comes, the optimized multi-frame image data may be read frame by frame from the frame buffer, and may be rendered, synthesized, and displayed on the screen.

Therefore, a situation of the image data being optimized in the frame buffer by on-screen rendering may be avoided by performing the off-screen rendering instead of on-screen rendering. The situation of the image data being optimized in the frame buffer by on-screen rendering may cause the video controller to take the image data out the frame buffer and display the image data on the screen based on the refreshing frequency of the screen before the image data is optimized.

It should be noted that, the above operations S601 and S602 may not be limited to be executed before the operation S603, and may also be executed after the operation S607. That is, the video may firstly be played based on the current refreshing frequency of the screen, and then the current refreshing frequency of the screen may be adjusted. In addition, parts of the operations that are not described in detail may refer to the foregoing description of the operations in the above embodiments, and will not be repeatedly described hereinafter.

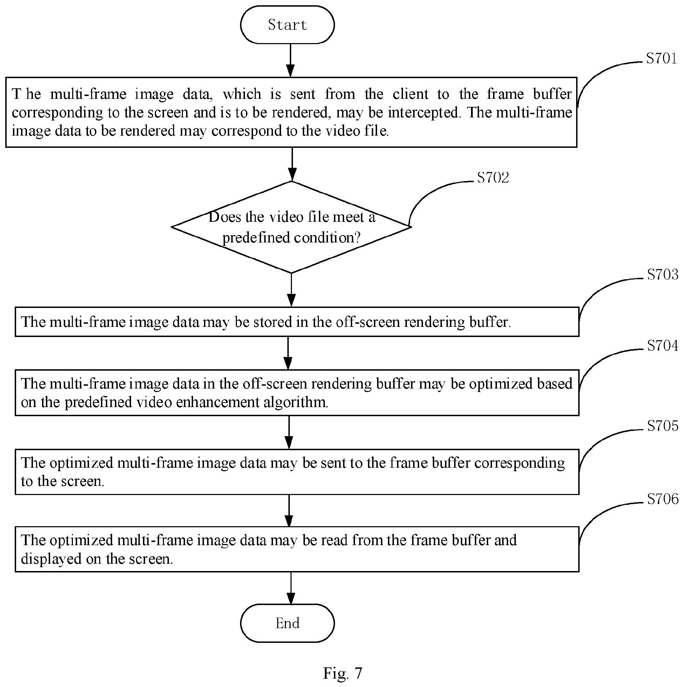

As shown in FIG. 7, a video-processing method according to an embodiment of the present disclosure is provided and includes operations S701 to S706.

In an operation S701, the multi-frame image data, which is sent from the client to the frame buffer corresponding to the screen and is to be rendered, may be intercepted. The multi-frame image data to be rendered may correspond to the video file.

In an operation S702, it may be determined whether the video file meets a predefined condition.

The predefined condition may be a condition defined by the user based on actual usage, such as, acquiring the video type of the video file. In response to the video type being a predefined type, it is determined that the video file meets the predefined condition. in detail, means of determining the video type may refer to the foregoing embodiment.

Further, the predefined condition may also be determining a real-time state of the video file. The method of the present disclosure involves optimizing the video file by performing the video enhancement on the video file. A new buffer may be set outside the frame buffer to prevent the video from being played on the screen before being enhanced. The present operation may have certain requirements for the real-time state of playing the video file. Therefore, it can be determined whether to perform the video enhancement based on the real-time state. In detail, a real-time level corresponding to the video file may be determined, and it may be determined whether the real-time level of the video file meets a predefined level. An operation S703 may be performed in response to the real-time level of the video file meeting the predefined level, whereas the method of the present embodiment may be ended in response to the real-time level of the video file not meeting the predefined level.

In detail, in response to the video playing request being received, the real-time level of the video file may be determined. In an implementation, the identifier of the client corresponding to the video file may be determined, and the real-time level of the video file may be determined based on the identifier of the client. In detail, the identifier of the client sending the video playing request may be determined, and the client type corresponding to the identifier of the client may be determined. Detail of performing the operations may refer to the above embodiments.

Subsequently, the real-time level corresponding to the video file may be determined based on the client type. In detail, the real-time level corresponding to each client type may be stored in the electronic device, as shown in Table 3.

Table 3

| Identifier of the client | Client type | Real-time level |
|---|---|---|
| Apk1 | Game | J1 |
| Apk2 | Video | J2 |
| Apk3 | Audio | J3 |
| Apk4 | Social | J1 |

According to the above-mentioned corresponding relationship, the real-time level corresponding to the video file may be determined. For example, in response to the identifier of the client corresponding to the video file being Apk4, the corresponding type may be social, and the corresponding real-time level may be J1. The J1 may be a highest real-time level, followed by J2 and J3 decreasing in order.

Further, it may be determined whether the real-time level of the video file meets the predefined level.

The predefined level may be a predefined real-time level corresponding to the required video enhancement algorithm, and may be set by the user based on demands. For example, the predefined level may be J2 and below. In response to the real-time level of the video file being J3, the real-time level of the video file meets the predefined level. In other words, video files having high requirements about the real-time state, the video enhancement algorithm may be omitted to avoid delay while playing the video, which may affect the user experience.

In an operation S703, the multi-frame image data may be stored in the off-screen rendering buffer.

Detail of performing the operation may refer to the above embodiments.

Further, an additional operation of determining whether the multi-frame image data is required to be stored in the off-screen rendering buffer based on the user watching the video may be performed.

In detail, the electronic device may be equipped with a camera, and the camera and the screen may be disposed on a same side of the electronic device. An image of a person collected by the camera may be obtained, and it may be determined whether the image of the person meets a predefined person standard. The multi-frame image data may be stored to the off-screen rendering buffer in response to the image of the person meeting the predefined person standard. In some embodiments, the operation of determining whether the image of the person meeting the predefined person standard may replace the above operation S702. In other embodiments, the operation of determining whether the image of the person meeting the predefined person standard may be combined with the above operation S702. For example, it may be determined whether the image of the person meets the predefined person standard. It may be determined whether the video file meets the predefined condition in response to the image of the person meeting the predefined person standard. The multi-frame image data may be stored in the off-screen rendering buffer in response to the video file meeting the predefined condition. Alternatively, it may firstly be determined whether the video file meets the predefined condition, and then it may be determined whether the image of the person meets the predefined person standard in response to the video file meeting the predefined conditions. The multi-frame image data may be stored in the off-screen rendering buffer in response to the image of the person meeting the predefined person standard.

Determining whether the person meeting the predefined person standard may be achieved by following means.

In some embodiments, an image of a face of the person may be extracted from the image of the person, and identity information corresponding to the image of the face may be determined, and it may be determined whether the identity information matches predefined identity information. It may be determined that the image of the person meets the predefined person standard in response to the identity information matches predefined identity information. The predefined identity information may be pre-stored identity information, and the identity information may be an identifier configured to distinguish different users. In detail, the image of the face may be analyzed to obtain feature information, and the feature information may be a facial feature or a facial contour, and so on, and the identity information may be determined based on the feature information.

In some other embodiments, an age of the user may be determined based on the image of the face. In detail, face recognition may be performed on the acquired image of the face, a facial feature of the current user may be recognized, and a system may preprocess the image of the face. That is, a position of the face in the image may be accurately identified, and detect facial features including a facial contour, a skin color, a texture, and a color. Useful information may be picked out from the above facial features according to different pattern features such as histogram features, color features, template features, structural features, Haar features, and so on, and the age of the current user may be analyzed. For example, feature modeling may be performed for certain facial features based on a knowledge representation method, algebraic features, or a statistical learning representation method, and by taking visual features, pixel statistical features, face image transform coefficient features, face image algebraic features, and so on.

An age group may include a children group, a juvenile group, a youth group, a middle-age group, and an elderly group, and so on. Alternatively, the age group may be defined by every 10 years old, starting from the age of 10. Alternatively, the users may be divided into only two age groups, the elderly group and an non-elderly group. Users in each age group may have their unique requirements about video enhancement. For example, users in the elderly group may not have high requirements about the visual effect of videos.

After determining the age group of the users, it may be determined whether the age groups falls within a predefined age range. The multi-frame image data may be in the off-screen rendering buffer and the video enhancement algorithm may be performed in response to the age groups falling within the predefined age range. The method of the present embodiment may be ended in response to the age groups not falling within a predefined age range. The predefined age range may be the youth group and middle age group. That is, the video enhancement operation may not be required to be performed on the video in response to the user being in the child age group, in the juvenile age group, and in the elderly age group.

In an operation S704, the multi-frame image data in the off-screen rendering buffer may be optimized based on the predefined video enhancement algorithm.

In an operation S705, the optimized multi-frame image data may be sent to the frame buffer corresponding to the screen.

In an operation S706, the optimized multi-frame image data may be read from the frame buffer and displayed on the screen.

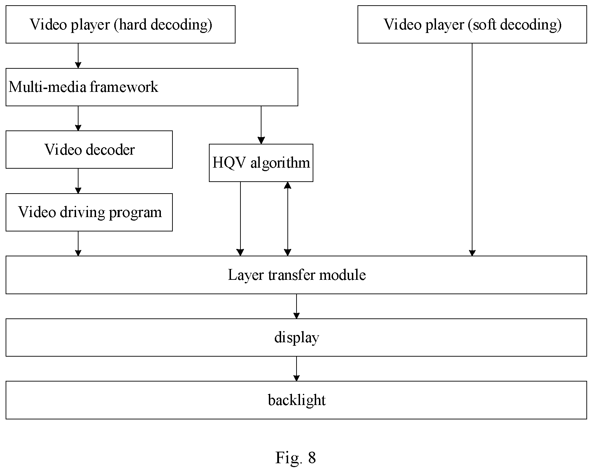

As shown in FIG. 8, the HQV algorithm module may be configured in the GPU. The HQV algorithm module may be the module allowing the user to perform the present video-processing method. Compared to the embodiment shown in FIG. 2, in the embodiment shown in FIG. 8, in response to the image data to be rendered being sent to the SurfaceFlinger after the soft decoding, the HQV algorithm module may intercept and optimize the image data, and may send the optimized data to the SurfaceFlinger for rendering, and the rendered image data may be displayed on the screen.

Further, parts of the above operation that are not described in detail may refer to the foregoing embodiments, and will not be repeatedly described hereinafter.

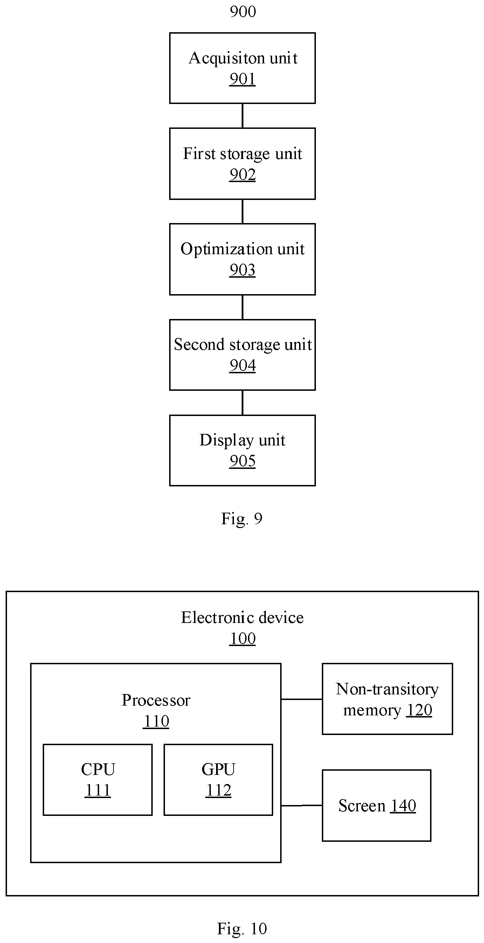

As shown in FIG. 9, FIG. 9 is a diagram of a video-processing apparatus according to an embodiment of the present disclosure. The apparatus may include: an acquisition unit 901, a first storage unit 902, an optimization unit 903, a second storage unit 904, and a display unit 905.

The acquisition unit 901 may be configured to intercept the multi-frame image data, which is sent from the client to the frame buffer corresponding to the screen and is to be rendered. The multi-frame image data to be rendered may correspond to the video file.

The first storage unit 902 may be configured to store the multi-frame image data to the off-screen rendering buffer.

The optimization unit 903 may be configured to optimize the multi-frame image data stored in the off-screen rendering buffer based on a predefined video enhancement algorithm.

The second storage unit 904 may be configured to send the optimized multi-frame image data to the frame buffer corresponding to the screen.

The display unit 905 may be configured to read the optimized multi-frame image data from the frame buffer and display the optimized multi-frame image data on the screen.

Any ordinary skilled person in the art should clearly understand that, in order to provide a concise description, specific working processes of the apparatus and the modules described in the above may refer to the corresponding processes as described in the foregoing method embodiments, which will not be repeatedly described hereinafter.

In the embodiments of the present disclosure, a plurality of modules may be electrically coupled with each other, mechanically coupled with each other, or coupled with each other in other manners.

Further, various functional modules of the present disclosure may be integrated into one processing module or may be physically separated from each other. Alternatively, two or more modules may be integrated into one module. The integrated module may be shown as a hardware structure or may be achieved in a form of a software functional module.

As shown in FIG. 10, FIG. 16 is a structural diagram of an electronic device according to an embodiment of the present disclosure. The electronic device 100 may be an electronic device able to run the client, such as a smart phone, a tablet computer, an electronic book, and so on. The mobile terminal 100 of the present disclosure may include one or more of the following components: a processor 110, a non-transitory memory 120, and one or more clients. The one or more clients may be stored in the non-transitory memory 120 and executed by one or more processors 110. One or more applications may be configured to execute the method as described in the above embodiments.

The processor 110 may include one or more processing cores. The processor 110 may use various interfaces and lines to connect various components of the mobile terminal 100. The processor 100 may execute various functions of the mobile terminal 100 and process data by running or executing an instruction, a program, a code or a code set stored in the non-transitory memory 120 and by invoking data stored in the non-transitory memory 120. Alternatively, the processor 110 may be achieved in at least one hardware form of a digital signal processing (DSP), a field programmable gate array (Field-Programmable Gate Array, FPGA), and a programmable logic array (Programmable Logic Array, PLA).

In detail, the processor 110 may include one or more of: a central processing unit (CPU), a graphics processing unit (GPU), and a modem. The CPU may be configured to process an operating system, a user interface, an application, and so on. The GPU may be configured to render or draw contents to be displayed. The modem may be configured to process wireless communication. It should be understood that, the modem may not be integrated into the processor 110, and may be configured as a communication chip.

The non-transitory memory 120 may include a random access memory (RAM) or a read-only memory (ROM). The non-transitory memory 120 may be configured to store an instruction for achieving the operating system, an instruction for achieving at least one function (such as the touch-operation function, an audio playing function, an image displaying function, and so on), an instruction for achieving the method embodiments, and so on. A data storage area may store data generated while the mobile terminal 100 is being used (such as a contact list, audio and video data, chat record data), and so on.

The screen 120 may be configured to display information input by the user, information provided for the user, and various graphical user interfaces of the electronic device. The graphical user interfaces may be composed of graphics, texts, icons, numbers, videos, and any combination thereof. In one embodiment, a touch screen may be disposed on the display panel so as to form an overall structure with the display panel.

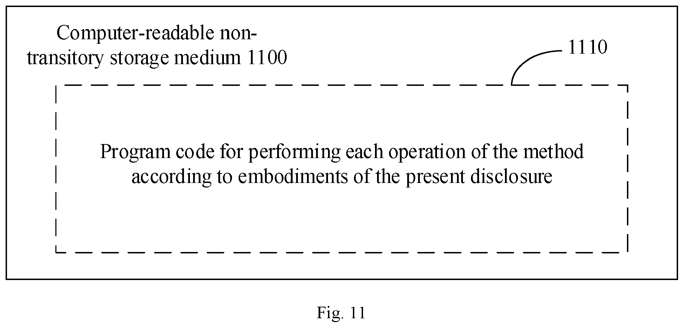

As shown in FIG. 11, FIG. 11 shows a structural diagram of a computer-readable non-transitory storage medium according to an embodiment of the present disclosure. The non-transitory storage medium 1100 stores a program code, and the program code may be invoked by the processor to perform the methods as described in the above embodiments.

The computer-readable non-transitory storage medium 1100 may be an electronic non-transitory memory, such as a flash memory, an electrically erasable programmable read only memory (EEPROM), an electrically programmable read only memory (EPROM), a hard control, or a ROM. Alternatively, the computer-readable non-transitory storage medium 1100 may include a non-volatile computer-readable non-transitory storage medium. The computer-readable non-transitory storage medium 1100 may have a storage area for storing a program code 1111, which may be executed to perform any method or operation as described in the above embodiment. The program code may be read from one or more computer program products or written into the one or more computer program products. The program code 1111 may be, for example, compressed in a proper manner.

It should be noted that, the above embodiments only illustrate, but do not limit, the technical solutions of the present disclosure. Although the present disclosure is described in detail with reference to the foregoing embodiments, any ordinary skilled person in the art should understand that they may modify the technical solutions described in the foregoing embodiments, or equivalently replace some of the technical features. The modification or replacement do not cause the essence of the corresponding technical solutions to depart from the spirit and the scope of the technical solutions of the embodiments of the disclosure.

**Claims**

1.    A video-processing method, applied in an electronic device, wherein the electronic device comprises a screen, and the method comprises:

intercepting multi-frame image data to be rendered, wherein the multi-frame image data is sent from a client to a frame buffer corresponding to the screen, and the multi-frame image data corresponds to a video file;
sending the multi-frame image data to an off-screen rendering buffer;
optimizing the multi-frame image data in the off-screen rendering buffer via a predefined video enhancement algorithm;
sending the optimized multi-frame image data to the frame buffer; and
reading the optimized multi-frame image data from the frame buffer, and displaying the optimized multi-frame image data on the screen.

2.    The method according to claim 1, wherein the sending the optimized multi-frame image data to a frame buffer, comprises:

sending the optimized multi-frame image data to the client; and

storing, by the client, the multi-frame image data into the frame buffer.

3. The method according to claim 1, wherein the optimizing the multi-frame image data in the off-screen rendering buffer based on a predefined video enhancement algorithm, comprises:
optimizing an image parameter of the multi-frame image data stored in the off-screen rendering buffer, wherein the optimizing the image parameter comprises at least one of: performing exposure enhancement, performing denoising, performing edge sharpening, performing contrast increasing, and performing saturation increasing.

4. The method according to claim 3, wherein in response to the optimizing the image parameter comprising performing exposure enhancement, the optimizing an image parameter of the multi-frame image data stored in the off-screen rendering buffer, comprises:

   determining an area having a low brightness value in each frame of image data in the off-screen rendering buffer; and
   increasing a brightness value of the area having the low brightness value in the image data.

5. The method according to claim 3, wherein in response to the optimizing the image parameter comprising performing denoising, the optimizing an image parameter of the multi-frame image data stored in the off-screen rendering buffer, comprises:
denoising the multi-frame image data in the off-screen rendering buffer through a Gaussian filter.

6. The method according to any one of claims 1 to 5, prior to the optimizing the multi-frame image data in the off-screen rendering buffer via a predefined video enhancement algorithm, further comprising:

   acquiring a video type of the video file; and
   determining the video enhancement algorithm based on the video type.

7. The method according to claim 6, wherein the acquiring a video type of the video file, comprises:

   determining an object type of each object in each frame of the video file;
   determining an image type of each frame based on a ratio of each object type to all objects in each frame; and
   determining the video type based on the image type.

8. The method according to any one of claims 1 to 7, wherein before the intercepting multi-frame image data to be rendered, wherein the multi-frame image data is sent from a client to a frame buffer corresponding to the screen, the method further comprises:
acquiring, by the client, the video file to be played, and processing the video file based on a soft decoding algorithm, to acquire the multi-frame image data corresponding to the video file.

9. The method according to any one of claims 1 to 8, wherein the reading the optimized multi-frame image data from the frame buffer frame by frame, rendering and synthesizing the optimized multi-frame image data, and displaying the synthesized multi-frame image data on the screen, comprises:
reading the optimized multi-frame image data from the frame buffer frame by frame based on a refreshing frequency of the screen, rendering and synthesizing the optimized multi-frame image data, and displaying the synthesized multi-frame image data on the screen.

10. The method according to claim 9, further comprising:

   acquiring a video playing request sent from the client, wherein the video playing request comprises the video file; and
   reducing the refreshing frequency of the screen in response to a predefined condition being met by the client.

11. The method according to claim 10, wherein the reducing the refreshing frequency of the screen in response to a predefined condition being met by the client, comprises:

   acquiring an identifier of the client;
   determining whether the identifier of the client meeting a predefined identifier; and
   reducing the refreshing frequency of the screen in response to the identifier of the client meeting the predefined identifier.

**12.** The method according to claim 10, wherein the reducing the refreshing frequency of the screen in response to a predefined condition being met by the client, comprises:

acquiring a client type;
determining whether the client type meets a predefined type; and
reducing the refreshing frequency of the screen in response to the client type meeting a predefined type.

**13.** The method according to claim 12, wherein the acquiring a client type comprises:

acquiring operation behavior data of all users of the client within a predefined durationin condition of the client supporting both playing video files and playing audio files, wherein the operation behavior data comprises: a name of the video files, time of the video files played by the client, a name of the audio file, time of the audio files;
determining a total playing duration of the audio files and a total playing duration of the video files based on the operation behavior data; and
determining the client type based on a ratio of the total playing duration of the audio files to the predefined time period and a ratio of the total playing duration of the video files to the predefined time period.

**14.** The method according to claim 13, wherein the client type comprises a video type and an audio type, and the determining the client type based on a ratio of the total playing duration of the audio file in the predefined time period and ratio of the total playing duration of the video file in the predefined time period, comprises:

recording the ratio of the total playing duration of the audio files in the predefined time period as an audio playing ratio, recording the ratio of the total playing duration of the video files in the predefined time period as a video playing ratio;
setting the client type to be the video type in response to the video playing ratio being greater than the audio playing ratio; and
setting the client type to be the audio type in response to the audio playing ratio being greater than the video playing ratio.

**15.** The method according to any one of claims 1 to 14, wherein the storing the multi-frame image data to an off-screen rendering buffer, comprises:

determining whether the video file meets a predefined condition; and
storing the multi-frame image data to the off-screen rendering buffer in response to the video file meeting the predefined condition.

**16.** The method according to any one of claims 1 to 15, wherein the intercepting multi-frame image data to be rendered, wherein the multi-frame image data is sent from a client to a frame buffer corresponding to the screen, comprises: invoking a data interception module installed in an operating system to intercept the multi-frame image data to be rendered, wherein the multi-frame image data to be rendered is sent from a client to a frame buffer corresponding to the screen.

**17.** The method according to claim 16, wherein the data interception module is a service module.

**18.** A video-processing apparatus, applied in an electronic device, wherein the electronic device comprises a screen, and the apparatus comprises:

an interception unit, configured to intercept multi-frame image data to be rendered, wherein the multi-frame image data is sent from a client to a frame buffer corresponding to the screen, and the multi-frame image data to be rendered corresponds to a video file;
a first storage unit, configured to store the multi-frame image data to an off-screen rendering buffer;
an optimization unit, configured to optimize the multi-frame image data in the off-screen rendering buffer via a predefined video enhancement algorithm;
a second storage unit, configured to send the optimized multi-frame image data to a frame buffer; and
a display unit, configured to read the optimized multi-frame image data from the frame buffer, and display the optimized multi-frame image data on the screen.

**19.** An electronic device, comprising:

a processor;
a non-transitory memory;
a screen; and
one or more clients, wherein the one or more clients are stored in the non-transitory memory and are configured to be executed by the processor, and one or more programs are configured to execute the method according to any one of claims 1 to 17.

**20.** A computer-readable non-transitory storage medium, wherein a program code is stored in the computer-readable non-transitory storage medium, and the program code is able to be invoked and executed by a processor to perform the method according to any one of claims 1 to 17.

| Video player (hard decoding) | Video player (soft decoding) |

Multi-media framework

Video decoder

Video driving program

Layer transfer module

display

backlight

FIG. 1

client

Bus line

CPU

GPU → Frame buffer

Video controller → display

FIG. 2

Start

Multi-frame image data to be rendered may be intercepted. The multi-frame image data to be rendered may be sent from a client to a frame buffer corresponding to a screen, and the multi-frame image data to be rendered may correspond to a video file. ⎯S301

The multi-frame image data may be stored into an off-screen rendering buffer. ⎯S302

The multi-frame image data in the off-screen rendering buffer may be optimized by the predefined video enhancement algorithm. ⎯S303

The multi-frame image data after being optimized may be sent to the frame buffer corresponding to the screen. ⎯S304

The optimized multi-frame image data may be read from the frame buffer and displayed on the screen. ⎯S305

End

FIG. 3

FIG. 4

S501

A temporary texture may be generated and bound to the FBO.

S502

A rendering object may be bound to the FBO.

S503

The FBO may be cleared.

S504

A HQV algorithm may be bound to a Shader Program.

S505

Is it first time to perform optimization?

S506    YES    NO    S507

An initial texture may be bound.

The temporary texture may be bound.

S508

Convolution rendering

S509

YES

Optimization operation to be iteratively performed?

NO    S510

The rendering object may be bound to the Framebuffer.

S511

The Framebuffer may be cleared.

S512

A drawing texture may be bound to the Shader Program.

S513

Texture rendering may be performed.

S514

YES

A next frame of image to be drawn?

NO    S515

A result may be output.

S516

The data may be reclaimed.

FIG. 5

```
                        ┌─────────────┐
                        │    Start    │
                        └──────┬──────┘
                               │
                               ▼                                    ── S601
┌──────────────────────────────────────────────────────────────┐
│ A video playing request sent from the client may be acquired, │
│ and the video playing request may include a video file.       │
└──────────────────────────────┬───────────────────────────────┘
                               │
                               ▼                                    ── S602
┌──────────────────────────────────────────────────────────────┐
│ The refreshing frequency of the screen may be reduced in       │
│ response to the client meeting a predefined standard.          │
└──────────────────────────────┬───────────────────────────────┘
                               │
                               ▼                                    ── S603
┌──────────────────────────────────────────────────────────────┐
│ The multi-frame image data, which is sent from the client to   │
│ the frame buffer corresponding to the screen and is to be      │
│ rendered, may be intercepted. The multi-frame image data to be │
│ rendered may correspond to the video file.                     │
└──────────────────────────────┬───────────────────────────────┘
                               │
                               ▼                                    ── S604
┌──────────────────────────────────────────────────────────────┐
│ The multi-frame image data may be stored in the off-screen     │
│ rendering buffer.                                              │
└──────────────────────────────┬───────────────────────────────┘
                               │
                               ▼                                    ── S605
┌──────────────────────────────────────────────────────────────┐
│ The multi-frame image data stored in the off-screen rendering  │
│ buffer maybe optimized based on the predefined video           │
│ enhancement algorithm.                                         │
└──────────────────────────────┬───────────────────────────────┘
                               │
                               ▼                                    ── S606
┌──────────────────────────────────────────────────────────────┐
│ The optimized multi-frame image data may be sent to the frame  │
│ buffer corresponding to the screen.                            │
└──────────────────────────────┬───────────────────────────────┘
                               │
                               ▼                                    ── S607
┌──────────────────────────────────────────────────────────────┐
│ The optimized multi-frame image data may be read frame by      │
│ frame from the frame buffer based on the refreshing frequency  │
│ of the screen, and may be rendered, synthesized and displayed  │
│ on the screen.                                                 │
└──────────────────────────────┬───────────────────────────────┘
                               │
                               ▼
                        ┌─────────────┐
                        │     End     │
                        └─────────────┘
```

FIG. 6

```
                              ┌──────────┐
                              │  Start   │
                              └──────────┘
                                   │
                                   ▼
                                                                        S701
┌──────────────────────────────────────────────────────────────────┐
│ T he  multi-frame  image  data,  which  is  sent  from  the  client │
│ to  the  frame  buffer  corresponding to the screen and is to be   │
│ rendered, may be intercepted. The multi-frame image data to be    │
│ rendered may correspond to the video file.                         │
└──────────────────────────────────────────────────────────────────┘
                                   │
                                   ▼
                                                                        S702
                         ◇─────────────────◇
                        Does the video file meet a
                         predefined condition?
                         ◇─────────────────◇
                                   │
                                   ▼
                                                                        S703
┌──────────────────────────────────────────────────────────────────┐
│ The multi-frame image data may be stored in the off-screen         │
│ rendering buffer.                                                  │
└──────────────────────────────────────────────────────────────────┘
                                   │
                                   ▼
                                                                        S704
┌──────────────────────────────────────────────────────────────────┐
│ The multi-frame image data in the off-screen rendering buffer may  │
│ be optimized based on the predefined video enhancement algorithm.  │
└──────────────────────────────────────────────────────────────────┘
                                   │
                                   ▼
                                                                        S705
┌──────────────────────────────────────────────────────────────────┐
│ The optimized multi-frame image data may be sent to the frame      │
│ buffer corresponding to the screen.                                │
└──────────────────────────────────────────────────────────────────┘
                                   │
                                   ▼
                                                                        S706
┌──────────────────────────────────────────────────────────────────┐
│ The optimized multi-frame image data may be read from the frame    │
│ buffer and displayed on the screen.                                │
└──────────────────────────────────────────────────────────────────┘
                                   │
                                   ▼
                              ┌──────────┐
                              │   End    │
                              └──────────┘
```

Fig. 7

```
┌─────────────────────────────┐              ┌─────────────────────────────┐
│ Video player (hard decoding)│              │ Video player (soft decoding)│
└─────────────────────────────┘              └─────────────────────────────┘
              │                                              │
              ▼                                              │
┌─────────────────────────────┐                             │
│   Multi-media framework      │                            │
└─────────────────────────────┘                             │
       │              │                                      │
       ▼              ▼                                      │
┌───────────────┐  ┌───────────────┐                        │
│ Video decoder │  │ HQV algorithm │                        │
└───────────────┘  └───────────────┘                        │
       │              │    ▲                                 │
       ▼              ▼    │                                 ▼
┌───────────────────────────────────────────────────────────────────┐
│                     Layer transfer module                          │
└───────────────────────────────────────────────────────────────────┘
                              │
                              ▼
┌───────────────────────────────────────────────────────────────────┐
│                           display                                  │
└───────────────────────────────────────────────────────────────────┘
                              │
                              ▼
┌───────────────────────────────────────────────────────────────────┐
│                          backlight                                 │
└───────────────────────────────────────────────────────────────────┘
```

Fig. 8

900

Acquisiton unit
901

First storage unit
902

Optimization unit
903

Second storage unit
904

Display unit
905

Fig. 9

Electronic device
100

Processor
110

CPU
111

GPU
112

Non-transitory
memory 120

Screen 140

Fig. 10

Computer-readable non-transitory storage medium 1100

1110

Program code for performing each operation of the method according to embodiments of the present disclosure

Fig. 11

## INTERNATIONAL SEARCH REPORT

| International application No. |
| --- |
| **PCT/CN2019/094614** |

| A. | CLASSIFICATION OF SUBJECT MATTER |
| --- | --- |

H04N 21/431(2011.01)i

According to International Patent Classification (IPC) or to both national classification and IPC

| B. | FIELDS SEARCHED |
| --- | --- |

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; VEN; CNKI: 帧缓冲区, 缓冲, 类型, 种类, 类别, 增强, 渲染, 优化, 对象, 帧, 多帧, 拦截, 离屏, 屏幕, 显示, 视频, 音频, 字幕, frame, buffer, type, character, enhance, object, screen, display, video, audio, subtitle, render

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 105933724 A (FUJIAN STAR-NET EVIDEO INFORMATION SYSTEM CO., LTD.) 07 September 2016 (2016-09-07) description, paragraphs [0069]-[0173] | 1-9, 15-20 |
| Y | CN 104602116 A (BEIJING RESEARCH CENTER OF INTELLIGENT EQUIPMENT FOR AGRICULTURE) 06 May 2015 (2015-05-06) description, paragraphs [0008]-[0103], and figure 4 | 1-9, 15-20 |
| PX | CN 109168068 A (GUANGDONG OPPO MOBILE TELECOMMUNICATIONS CORP., LTD.) 08 January 2019 (2019-01-08) claims 1-10 | 1-20 |
| A | CN 104602100 A (TENCENT TECHNOLOGY (CHENGDU) CO., LTD.) 06 May 2015 (2015-05-06) description, paragraphs [0047]-[0117] | 1-20 |
| A | CN 108305208 A (HANGZHOU PINMING SECURITY INFORMATION TECHNOLOGY CO., LTD.) 20 July 2018 (2018-07-20) entire document | 1-20 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 September 2019** | **23 September 2019** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## **INTERNATIONAL SEARCH REPORT**

| International application No. |
| --- |
| **PCT/CN2019/094614** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 101976183 A (GUANGDONG VTRON TECHNOLOGIES LTD. ET AL.) 16 February 2011 (2011-02-16)<br>        entire document | 1-20 |

Form PCT/ISA/210 (second sheet) (January 2015)

28

**INTERNATIONAL SEARCH REPORT**
Information on patent family members

| International application No. |
| --- |
| **PCT/CN2019/094614** |

| Patent document cited in search report | | | Publication date (day/month/year) | Patent family member(s) | | | Publication date (day/month/year) |
| --- | --- | --- | --- | --- | --- | --- | --- |
| CN | 105933724 | A | 07 September 2016 | None | | | |
| CN | 104602116 | A | 06 May 2015 | CN | 104602116 | B | 22 February 2019 |
| CN | 109168068 | A | 08 January 2019 | None | | | |
| CN | 104602100 | A | 06 May 2015 | None | | | |
| CN | 108305208 | A | 20 July 2018 | None | | | |
| CN | 101976183 | A | 16 February 2011 | CN | 101976183 | B | 22 February 2012 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810969496